# EUROPEAN PATENT APPLICATION

(11) **EP 3 855 363 A1**
(43) Date of publication of application: **28.07.2021**
(21) Application number: 20153107.6
(22) Date of filing: 22.01.2020
(51) Int. Cl.: G06N 3/04, G06N 3/08

(54) **COMPUTER IMPLEMENTED METHOD AND DEVICE FOR CLASSIFYING DATA**

(71) Applicant: Robert Bosch GmbH, 70442 Stuttgart (DE)
(72) Inventor: Schoenfeld, Edgar, 1013 LL Amsterdam (NL); Khoreva, Anna, 70197 Stuttgart (DE)

(57) **Abstract**

Device (100) for and method of classifying data, in particular image data, based on a model (112), the model (112) comprising a generator and a classifier, wherein the generator is trained to generate artificial training examples comprising embeddings, in particular feature maps, from training examples belonging to a dataset and class embeddings belonging to a first set of class embeddings, the method comprising determining an artificial training example depending on an embedding, in particular a feature map, output of the generator in response to a class embedding of a second set of class embeddings, in particular wherein the first set of class embeddings and the second set of of class embeddings are disjoint sets, storing the artificial training example and/or training the classifier to determine a class for the artificial training example from a set of classes depending on the artificial training example and the class embedding, in particular wherein the set of classes is the union of a first set of classes characterized by the first set of class embeddings and a second set of classes characterized by the second set of class embeddings, and classifying data depending on the classifier.

## Description

### Background

The invention relates to a method and a device for classifying data.

In data processing, image data may be classified by a classifier. The classifier may be trained to classify the data based on training data. The classifier may be trained to improve the classification based on additional data, when additional data of different origin is available for the training data. The additional data may comprise a textual description of the training data.

### Disclosure of the invention

The device for and computerimplemented method of classifying data, in particular image data, of the independent claims is based on an image-feature generation that is robust to different structures of the classifier, e.g. the hyperparameters defining the structure of the artificial neural network that is trained as classifier. The desired classifier performance in terms of accuracy is achievable without the need for additional engineering and/or the introduction and finetuning of auxiliary losses. Furthermore, the training of the classifier is accomplished quickly and stably. Additionally, for data of different modes, theoretically the so trained classifier guarantees to cover all modes of the data.

In a method of classifying data, in particular image data, based on a model, the model comprising a generator and a classifier, wherein the generator is trained to generate artificial training examples comprising embeddings, in particular feature maps, from training examples belonging to a dataset and class embeddings belonging to a first set of class embeddings, the method comprising determining an artificial training example depending on an embedding, in particular a feature map, output of the generator in response to a class embedding of a second set of class embeddings, in particular wherein the first set of class embeddings and the second set of of class embeddings are disjoint sets, storing the artificial training example and/or training the classifier to determine a class for the artificial training example from a set of classes depending on the artificial training example and the class embedding, in particular wherein the set of classes is the union of a first set of classes characterized by the first set of class embeddings and a second set of classes characterized by the second set of class embeddings, and classifying data depending on the classifier. The method generates artificial training data and trains the classifier with the generated artificial training data.

The method may comprise providing a set of artificial examples for a class embedding, wherein the classifier is trained depending on a plurality of artificial examples sampled from the set of artificial examples and depending on the class embedding. Thus the classifier is trained efficiently.

The method may comprise providing a plurality of training pairs and training the generator to generate artificial training examples depending on the plurality of training pairs. This provides training data comprising features instead of image.

Training the generator may comprise generating a plurality of different artificial data points from noise, sampling a plurality of training data points from a training set, determining a plurality of pairs, wherein a pair of the plurality of pairs comprises a training data point and a closest artificial data point, determining at least one parameter for the generator minimizing a measure of a distance between the plurality of pairs. Parameters that minimize the measure of the distance are found efficiently.

The method may comprise determining for at least one training data point of the plurality of training data points the closest artificial data point in the plurality of different artificial data points by finding the closest neighbor of the at least one training data point based on a distance metric, in particular based on a Euclidean distance.

Preferably, the method comprises generating an artificial data point depending on a class embedding for a class, wherein the nearest neighbor is searched in training data points of the same class. This is very efficient, as only same class data is used for training.

The classifier may be trained to predict a class based on at least one training pair comprising a training example from the dataset and a corresponding class embedding of the first set of class embeddings.

The classifier may be trained to predict a class based on at least one training pair comprising an artificial sample from the set of artificial samples and a corresponding class embedding of the second set of class embeddings.

In a corresponding device for classifying data, in particular image data, based on a model, the device comprises a processor and storage for storing the model, wherein the processor and the storage are adapted for executing the method.

Further advantageous embodiments are derivable from the following description and the drawings. In the drawings:
- Fig. 1: depicts schematically a device for processing data,
- Fig. 2: depicts steps in a method for an artificial neural network.

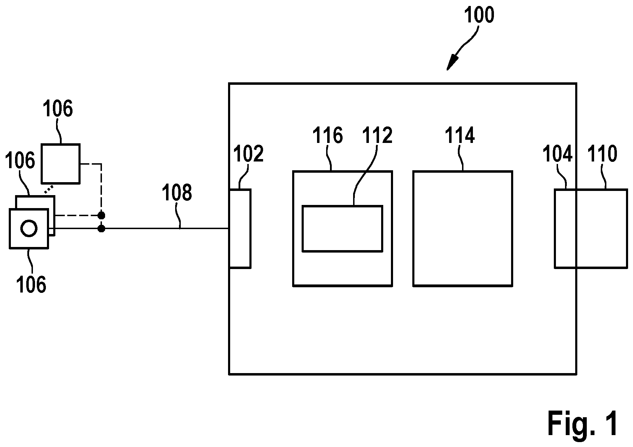

A device 100 for processing data is depicted in figure 1. The device 100 comprises an input 102 for input data and an output 104 for output data. The input 102 may be connected to a sensor 106 or a plurality of sensors 106. Sensor data may be received via a data bus 108. The sensor 106 may be a camera, a radar sensor, a LiDAR sensor, a sonar sensor or a microphone. The sensor 106 may be adapted to capture image data, video data, audio data, a radar signal, a LiDAR signal and/or a sonar signal. The device 100 may be adapted to process input data to determine the output data. The output 104 may be connected to an actuator 110 or a plurality of actuator 110. The actuator 110 may be adapted to actuate a computer-controlled machine, like a robot, a vehicle, a domestic appliance, a power tool, a manufacturing machine, a personal assistant or an access control system. The output 104 may output control signals. The device 100 may be adapted to process input data from various sensors in a sensor fusion to produce an output signal for the output 104. Sensor fusion refers in this context to combining of sensor data derived from the sensors such that the resulting information has less uncertainty than would be possible when these sources were used individually. The output 104 may output image data for a system for conveying information, like a surveillance system or a medical (imaging) system.

The device 100 is in the example adapted to classify input data. The input data in one example is a digital image represented by or created from the sensor data. A digital image in this context refers to a digital picture, a video image, a radar image, LiDAR image or sonar image in particular captured by at least one of the respective sensors. An audio signal may be converted to a digital image e.g. by fast Fourier transform. In the example, the device 100 comprises a model 112, e.g. a classifier, that is adapted to classify the embeddings, i.e. features. The model 112 comprises for example a neural net defining the classifier. The device 100 may be adapted to process input data from different origins, e.g. cameras or sensors or databases including textual descriptions of image. The device 100 may be adapted to make complementary data from different origins interchangeable for the training of the classifier or for the classification by the classifier.

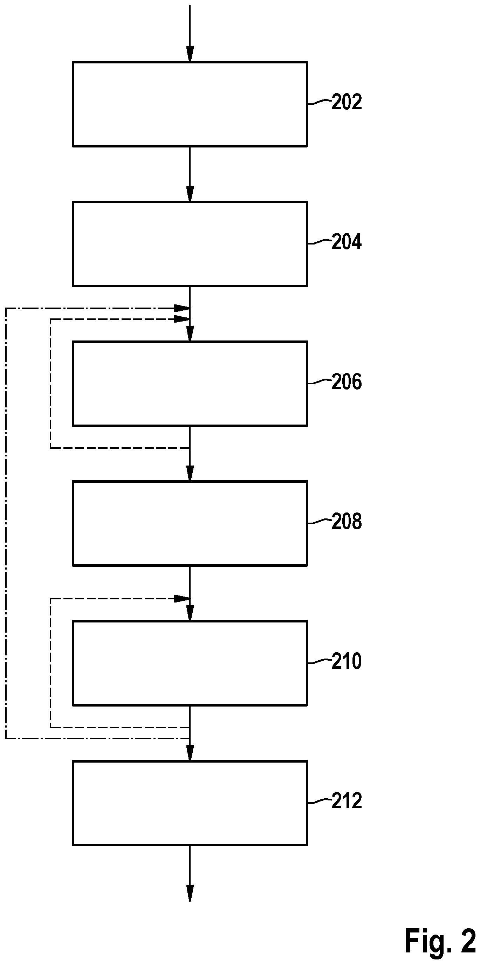

The device 100 comprises a processor 114 and a storage 116 for storing the model 112. The storage 116 may comprise instructions that are executable by the processor 114 to perform steps of a method for classifying data that is described below referencing figure 2.

The method improves the classification of any kind of data when additional data of a different origin is available.

For example, an app for the classification of mushrooms from photographed digital images can be improved by textual descriptions of the mushroom species. The textual description may be available for instance from a lexicon. The lexicon may be stored in the database. The classifier is trained and used to classify some rare mushroom species correctly based on a photo thereof, even when no digital image for this rare species exists in training data.

When a digital image is processed, an embedding of the digital image may be defined. This is referred to as artificial training example.

Class embeddings are defined by class specific attribute vectors or word embeddings in the class embedding space. In the example, linguistic data comprising a textual description may be mapped to an attribute vector or word embedding.

The method applies to train a machine learning system comprising the classifier that can be used for any other of the above applications as well.

In one aspect of the method, the classifier is trained. In another aspect of the method, the classifier is used to classify data. In yet another aspect, the method can be used to generate training data for the above mentioned training.

In the method, in a step 202 a training pair *s*, *c^{S}* is provided. In the example a dataset S of training examples s is provided. A plurality of training pairs *s*,*c^{S}* may be provided for the raining examples *s* of the dataset *S*.

A training example s may comprise an embedding of image data of a mushroom and a class embedding, e.g. an embedding of linguistic data comprising a textual description thereof.

A training example *s* is an input for the model 112. For each training example *s* there is a class *y^{S}* belonging to a first set of classes *Y^{S}* available for training. For each class *y^{S}* contained in the first set of classes *Y^{S}*, there is a corresponding class embedding *c^{S}*, belonging to a first set of class embeddings *C^{S}*.

In the example, each class *y^{S}* identifies a certain characteristic of a mushroom, in the example the mushroom species.

Furthermore, there is a second set of classes *Y^{U}* for which no training examples are available. For each class *y^{U}* contained in the second set of classes *Y^{U}*, there is a corresponding class embedding *c^{U}*, belonging to a second set of class embeddings *C^{U}*.

In the example, each class *y^{U}* identifies the characteristic of a mushroom, in the example the mushroom species. The second set of classes *Y^{U}* corresponds to the rare mushroom species mentioned above.

Afterwards a step 204 is executed.

In the step 204 a generator is provided.

The model 112 may comprise for example an artificial neural net defining the generator. In this case the hyperparameters defining the structure of the generator are provided.

In one aspect, the generator is defined by a generator function *G*:*Z → X,* which maps noise *Z* ∈ *R^{N}* to an output space *X* ∈ *R^{D}.* In another aspect, in a class-conditional case, the data-generating model comprises a generator function *G* that takes an additional conditional variable *C* as input *G: ZxC* → *X.* In the class-conditional case, the variable *C* defines classes. In the example the varibale *C* is a class embedding space defined by a union of the first set of class embeddings *C^{S}* and the second set of class embeddings *C^{U}*.

The generator function *G* comprises parameters. In the example, the artificial neural net comprises corresponding parameters. The parameters are in the example initialized with random values.

Afterwards a step 206 is executed.

In the step 206 the model 112, e.g. the generator, is trained to generate artificial training examples *u* comprising embeddings, in particular feature maps, from the training pairs *s,c^{S}* belonging to *S* and *C^{S}*.

A training example *s* and a class embedding *c^{S}* define a training pair *s, c^{S}.* A training set *T* comprises the plurality of training pairs *s, c^{S}.*

The class embedding *c^{S}* in a training pair *s, c^{S}* defines the desired output data of the model 112, i.e. the output data that the model 112 determines in response to the training example *s* when it classifies the training example *s* correctly as belonging to the class *y^{s}.* The generator function *G* is optimized in the example via stochastic gradient descend based on the dataset *S* in an alternating procedure of the following two step process:
(1.) Finding the nearest neighbor to each data point from a pool of generated examples by
   a) generating a plurality of different artificial data points. The artificial data points are generated from noise *Z* in the output space *X* by the generator function *G*:*Z* → *X.* The artificial data points are for example sampled from the output space *X* generated by the generator *G.*
   b) sampling a plurality of training data points from the training set *T.* A training example *s* and and the corresponding class embedding *c^{S}* of a training pair *s, c^{S}* are used in the example as a training data point.
   c) finding, for every sampled training data point, the closest artificial data point in the plurality of different artificial data points. The closest artificial data point is for example determined as the closest neighbor based on a distance metric, e.g. based on a Euclidean distance. The nearest neighbor search is in the example restricted to samples from the output space *X* and samples from the from the training set *T* of the same class.
   d) assigning each training data point to its artificial data point. In the example, one training data point and one artificial data point form a pair of one real data point and one fake data point. For the plurality of training data points and artificial data points this results in a plurality of real-fake pairs.
(2.) minimizing a measure of the distance between these real-fake pairs by
   a) sampling a plurality of minibatches of real-fake pairs from the plurality of real-fake pairs.
   b) iteratively determining at least one parameter for the generator function *G.* In each iteration, one minibatch of the pluraltiy of minbatches is processed to determine at least one parameter for the generator function *G* depending on a loss. The loss for a iteration depends on the distance between the real data point and the fake data point of all real-fake pairs of the minibatch that is processed in this iteration. Any distance function may be used to determine the distance. For example a L1-distance ist used. The L1-distance is defined as the absolute (non-negative) distance between a tensor a and b (|a-b|). This distance is in the example the loss, or may be part of the loss. The loss is a function that is minimized via incremental gradient descend steps for the iterations of training. In each iteration the at least one parameter is determined that minimizes the loss. The at least one parameter is determined in the example depending on the plurality of real-fake pairs using stochastic gradient descent. Iteratively all minibatches of the plurality of minibatches are processed and for each minibatch the at least one parameter is determined. based on stochastic gradient descent.
   c) determining at least one parameter of the generator function *G,* e.g. by replacing the at least one parameter of the generator function *G* by the at least one parameter determined in the last of the iterations.

The generator is used to address the problem of missing training data for the second set of classes *Y^{U}* for which no training examples are available.

The generator is trained to generate embeddings of artificial data comprising embeddings of artificial data, in particular features. In the example, embeddings of actual artificial digital images, e.g. of mushrooms, are not required, instead the embeddings are generated for classes *y^{U}* that do not have image training data.

The generative modeling of the embeddings is performed in contrast to the "Implicit Maximum Likelihood Estimation" (IMLE). Li K, Malik J. Implicit maximum likelihood estimation. arXiv preprint arXiv:1809.09087. 2018 Sep 24. While IMLE is very effective, IMLE is a method to learn parameters of an implicit probabilistic model for creating artificial digital image data. Instead of creating the artificial image data, the generator is trained to generate features. Like IMLE, the training of the generator does not suffer from mode collapse, vanishing gradients and training instability. Thus, a generator is provided efficiently that is optimized in a training via stochastic gradient descent.

By repeating the process, at least one of the parameters of the generator function G or all of the parameters may be determined. When the generator is implemented as artificial neural network, the corresponding parameters therein are determined.

Afterwards a step 208 is executed.

In the step 208 a artificial training example *u* for a set of artificial examples *U* is determined. In the example the artificial training examples *u* are determined dependingon an embedding, in particular a feature map, output of the generator in response to the class embeddings *c^{U}* of the second set of class embeddings *C^{U}*. In the example, the generator function G is used to determine the set of artificial examples *U* from the class embeddings *c^{U}* of the second set of class embeddings *C^{U}*.

Given the class embeddings *C* and some noise *Z,* the generator function *G* determines convincing artificial data points as set of the artificial examples *U.* This means the generator function *G* in this case is *G: ZxC* → U.

The artificial examples *U* are features that are usable for training the classifier. When the classifier is used to classify images, the features generated here are not digital image data but embeddings. This means there is no need to reconstruct the digital image data.

Afterwards a step 210 is executed.

In the step 210 the classifier is trained in the class embedding space *C* based on the features.

The classifier is trained for learning a mapping between the feature and the class embedding. The training of the classifier in the class embedding space makes it possible to classify data of all classes, including those for which no image data is available.

For the second set of classes *Y^{U}*, for which no training examples are available, zero-shot learning can be used to train the classifier. Zero-shot learning in this context refers to the task of classifying images that belong to classes for which no training data is available. Zero-shot learning requires that data of a different form is available for all classes, including the classes for that no images are available. The first set of class embeddings *C^{Y}* and the second set of class embeddings *C^{U}* are used in the example for that purpose.

The classifier may be trained to predict a class *y* from a set of classes *Y.* The set of classes *Y* in the example is the union of the first set of classes *Y^{s}* and the second set of classes *Y^{U}.*

The classifier may be trained to predict the classes *y* based on a plurality of training pairs (*u*, *c^{U}*) each comprising an artificial sample refered to as artificial training example *u* from the set of artificial samples *U* and a corresponding class embedding *c^{U}* of the second set of class embeddings *C^{U}*.

The classifier may be trained to predict the classes *y* based on a plurality of training pairs (*s, c^{S}*) each comprising a training example s from the dataset *S* and a corresponding class embedding *c^{S}* of the first set of class embeddings *C^{S}*.

The classifier may be trained to predict the class y based on a plurality of training pairs (*u, c^{U}*) each comprising an artificial training example *u* and based on a plurality of training pairs (*s, c^{s}*) each comprising a training example *s.*

The classifier may be trained iteratively, e.g. by sampling minibatches comprising a plurality of the training pairs (*s*, *c^{s}*) comprising training example *s,* a plurality of the training pairs (*u, c^{U}*) comprising artificial training examples *u* or both and by determining at least one parameter for the classifier in iterations.

In the training, the classifier classifies data. The data that is classified by the classifier in the training is data of the artificial training example *u* of a training pair (*u, c^{U}*) or data of a training example *s* of a training pairs (s, *c^{s}*)*.*

The steps 206 to 210 may be repeated to alternatingly train the generator and the classifier of the model 112.

After the training, in a step 212, the so trained model 112 is used to classify input data. For example image data, video data, audio data, a radar signal, a LiDAR signal and/or a sonar signal are input data that is used to determine the output data. For example the input data from various sensors is processed in a sensor fusion depending on the classification of the input data to produce an output signal for the output 104.

In the example, input data of a digital image of a mushroom is classified to one of the classes *Y.* The output data in this case may comprise information about the mushroom species.

## Claims

1. Computer implemented method of classifying data, in particular image data, based on a model (112), the model (112) comprising a generator and a classifier, **characterized in that**
the generator is trained to generate artificial training examples comprising embeddings, in particular feature maps, from training examples belonging to a dataset and class embeddings belonging to a first set of class embeddings, the method comprising
determining (208) an artificial training example depending on an embedding, in particular a feature map, output of the generator in response to a class embedding of a second set of class embeddings, in particular wherein the first set of class embeddings and the second set of of class embeddings are disjoint sets,
storing the artificial training example and/or training (210) the classifier to determine a class for the artificial training example from a set of classes depending on the artificial training example and the class embedding, in particular wherein the set of classes is the union of a first set of classes **characterized by** the first set of class embeddings and a second set of classes **characterized by** the second set of class embeddings, and classifying (210, 212) data depending on the classifier.

2. The method of claim 1, **characterized by** providing (208) a set of artificial examples for a class embedding, wherein the classifier is trained (210) depending on a plurality of artificial examples sampled from the set of artificial examples and depending on the class embedding.

3. The method of claim 1 or 2, **characterized by** providing (202) a plurality of training pairs and training (206) the generator to generate artificial training examples depending on the plurality of training pairs.

4. The method of any of claims 1 to 3, **characterized by** training (206) the generator comprises:
generating a plurality of different artificial data points from noise,
sampling a plurality of training data points from a training set,
determining a plurality of pairs, wherein a pair of the plurality of pairs comprises a training data point and a closest artificial data point,
determining at least one parameter for the generator minimizing a measure of a distance between the plurality of pairs.

5. The method according to claim 4, **characterized by** determining for at least one training data point of the plurality of training data points the closest artificial data point in the plurality of different artificial data points by finding the closest neighbor of the at least one training data point based on a distance metric, in particular based on a Euclidean distance.

6. The method according to claim 5, **characterized by** generating an artificial data point depending on a class embedding for a class, wherein the nearest neighbor is searched in training data points of the same class.

7. The method according to any of claims 1 to 6, **characterized by** training (210) the classifier to predict a class based on at least one training pair comprising a training example from the dataset and a corresponding class embedding of the first set of class embeddings.

8. The method according to any of claims 1 to 7, **characterized by** training (210) the classifier to predict a class based on at least one training pair comprising an artificial sample from the set of artificial samples and a corresponding class embedding of the second set of class embeddings.

9. Device (100) for classifying data, in particular image data, based on a model (112), **characterized in that** the device (100) is adapted for executing the method according to one of the claims 1 to 8.

10. Computer program, **characterized by** computer readable instructions that when executed by a computer cause the computer to execute steps of the method according to one of the claims 1 to 8.
